(19) Europäisches Patentamt

European Patent Office

Office européen des brevets

(11) **EP 1 271 180 B1**

(12) **EUROPÄISCHE PATENTSCHRIFT**

(45) Veröffentlichungstag und Bekanntmachung des Hinweises auf die Patenterteilung:
**06.05.2004 Patentblatt 2004/19**

(51) Int Cl.⁷: **G01S 11/14**, G01S 3/808

(21) Anmeldenummer: **02011589.5**

(22) Anmeldetag: **27.05.2002**

(54) **Verfahren zum Bestimmen der Zielentfernung**

Method of determining target range

Méthode pour déterminer l'éloignement d'une cible

(84) Benannte Vertragsstaaten:
**AT BE CH CY DE DK ES FI FR GB GR IE IT LI LU MC NL PT SE TR**

(30) Priorität: **23.06.2001 DE 10130460**

(43) Veröffentlichungstag der Anmeldung:
**02.01.2003 Patentblatt 2003/01**

(73) Patentinhaber: **ATLAS ELEKTRONIK GmbH**
**28305 Bremen (DE)**

(72) Erfinder:
• **Schneider, Dietmar**
**28816 Stuhr (DE)**
• **Meyer, Ralf**
**28215 Bremen (DE)**

(56) Entgegenhaltungen:
**US-A- 4 910 719** **US-A- 5 410 519**
**US-A- 5 563 849**

• YANG T C: "BROADBAND SOURCE LOCALIZATION AND SIGNATURE ESTIMATION" JOURNAL OF THE ACOUSTICAL SOCIETY OF AMERICA, AMERICAN INSTITUTE OF PHYSICS. NEW YORK, US, Bd. 93, Nr. 4, 1. April 1993 (1993-04-01), Seiten 1797-1806, XP000363364 ISSN: 0001-4966

## Beschreibung

Die Erfindung betrifft ein Verfahren zum Bestimmen der Entfernung eines Schall ins Wasser abstrahlenden Ziels von einem untergetauchten, zielfernen Schallempfänger aus der im Anspruch 1 definierten Gattung.

Bei einem bekannten Verfahren zur Bestimmung der Zielentfernung (US 4 910 719) werden drei, elektroakustische Wandler einer Empfangsbasis einer Sonaranlage längs einer Geraden in einem großen Abstand voneinander installiert. Die elektrischen Ausgangssignale des mittleren Wandlers werden mit den Ausgangssignalen eines jeden äußeren Wandlers kreuzkorreliert und so die Zeitverschiebung zwischen den Ausgangssignalen der Wandler bestimmt. Mit den gemessenen Zeitverschiebungen $\tau_{1,2}$ und $\tau_{2,3}$ werden in bekannter Weise der Peilwinkel $\Theta_0$ zur Schallquelle gemäß

$$\Theta_0 = \text{arc sin } \frac{c(\tau_{1,2} + \tau_{2,3})}{2L} \tag{1}$$

und die Entfernung $R_0$ der Schallquelle zum mittleren Wandler gemäß

$$R_0 = \frac{L^2 \cos^2 \Theta_0}{c(\tau_{2,3} - \tau_{1,2})} \tag{2}$$

berechnet, wobei c die Schallgeschwindigkeit und L der Wandlerabstand ist.

Diese Meßergebnisse sind nur dann zuverlässig, wenn sichergestellt ist, daß die Empfangssignale miteinander vollständig oder weitgehend korrelieren, d.h. von der gleichen Schallquelle herrühren. Ist dagegen der Schallempfang von starken Störquellen oder anderen Schallquellen überlagert, so sind die Ausgangssignale der Wandler teilweise inkohärent und die wie vorstehend berechneten Entfernungswerte stellen unzuverlässige Meßergebnisse dar. Außerdem erfordert eine solche Empfangsbasis eine spezielle, ungestörte Ausrichtung der Wandler, wobei die Wandler in einem möglichst großen Abstand voneinander angeordnet werden müssen, so daß die Empfangsbasis eine extrem große Länge besitzt.

Der Erfindung liegt die Aufgabe zugrunde, ein Verfahren der eingangs genannten Art anzugeben, das unabhängig von der Ausbildung oder Art des verwendeten Schallempfängers oder der verwendeten Empfangsbasis auch bei starkem Störhintergrund die Zielentfernung eines detektierten Ziels in ausreichend guter Näherung liefert.

Die Aufgabe ist erfindungsgemäß durch die Merkmale im Anspruch 1 gelöst.

Das erfindungsgemäße Verfahren mit den Merkmalen des Anspruchs 1 hat den Vorteil, in Sonaranlagen bereits vorhandene Sonarkomponenten für seine Durchführung nutzen zu können und nur eine Softwareergänzung zu benötigen. Im allgemeinen fallen bei passiv arbeitenden Sonaranlagen zur Detektion und Peilung von schallabstrahlenden Zielen die Empfangsspektren in den Empfangssektoren oder Empfangskanälen bei der Peilung bereits an, so daß das erfindungsgemäße Verfahren nicht nur vollständig die Hardwarekomponenten nutzen, sondern auch auf diese Softwarekomponenten zurückgreifen kann. Das erfindungsgemäße Verfahren kann in Verbindung mit jeder breitbandig empfangenden Sonarantenne eingesetzt werden ,z.B. einer Zylinderbasis, einem conformal array, einer Linearantenne (linear array), einer Schleppantenne (towed array) oder einer Seitenantenne(flank array), auch Bordwandstreamer genannt. Das Verfahren arbeitet bei ausreichender Rechnerleistung in Echtzeit und liefert nach extrem kurzer Zeit Ergebnisse für die Entfernung eines Ziels in guter Näherung, die beispielsweise auch als Startwerte bei anderen Verfahren zur parallelen Bestimmungen weiterer Kenndaten des Ziels, wie Zielgeschwindigkeit, Kurs etc., eingesetzt werden können, wodurch wiederum die Meßergebnisse dieser Verfahren sehr viel schneller konvergieren. Das erfindungsgemäße Verfahren kann auch in Verbindung mit Aktivsonaren dazu benutzt werden, die Verratswahrscheinlichkeit des Aktivsonars zu reduzieren indem anhand der in nur kurzer Meßzeit vorliegenden Werte für die Zielentfernung der Sendepegel des Aktivsonars an die bekannte Zielentfernung angepaßt und damit reduziert wird. Solche Sendepegelanpassungen an die Zielentfernung sind unter den Begriffen "Low-Probability of Intercept (LPI)" oder "Low-Probability of Detection (LPD)" bekannt.

Zweckmäßige Ausführungsformen des erfindungsgemäßen Verfahren mit vorteilhaften Weiterbildungen und Ausgestaltungen der Erfindung ergeben sich aus den weiteren Ansprüchen.

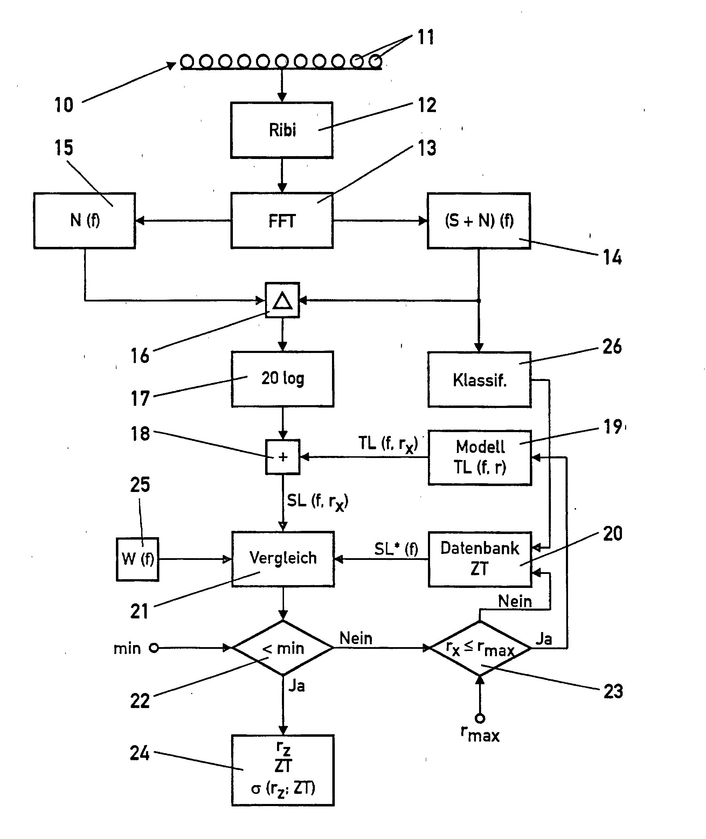

Die Erfindung ist anhand eines in der Zeichnung illustrierten Ausführungsbeispiels im folgenden näher beschrieben. Dabei zeigt die Zeichnung ein Blockschaltbild zur Erläuterung der einzelnen Verfahrensschritte.

Zur Detektion, Ortung und Klassifikation von Zielen, die Schall ins Wasser abstrahlen, wird in der Sonartechnik ein weit von der Schallquelle entfernter, räumlich ausgedehnter Schallempfänger, auch Empfangsbasis genannt, mit mehreren, voneinander beabstandeten, elektroakustischen Wandlern verwendet. Eine solche Empfangsbasis ist z.B. eine Zylinderbasis, eine Linearbasis (linear array), ein conformal array, ein towed array oder ein flank array. Ein Ziel ist jede im Wasser befindliche Schallquelle, die breitbandig Schall ins Wasser abstrahlt, wie sie z.B. von den Antriebsmaschinen oder sonstigen geräuscherzeugenden Arbeitsaggregaten von zivilen und militärischen Oberflächenschiffen, U-Booten oder Torpedos gebildet wird.

Der Schallempfänger 10, der auf einer ins Wasser eintauchenden Plattform, z.B. einem U-Boot, installiert ist, weist in bekannter Weise eine Mehrzahl von elektroakustischen Wandlern 11 auf. Im Ausführungsbeispiel des als Linearantenne ausgebildeten Schallempfängers 10 sind die Wandler 11 im vorzugsweise konstanten Abstand voneinander nebeneinander aufgereiht. Aus den elektrischen Empfangssignalen der Wandler 11 werden durch Richtungsbildung getrennte Empfangssektoren oder Empfangskanäle aufgespannt, die gleichzeitig ausgewertet werden. Zur Richtungsbildung werden beispielsweise in bekannter Weise die zeitverzögerten Empfangssignale aller Wandler 11 (bei Zylinderbasen einer ausgewählten Gruppe benachbarter Wandler) um für die jeweilige Richtung des Empfangssektors erforderliche Zeitverzögerungen zeitverzögert und konphas zu einem Gruppensignal addiert. Die Gruppensignale repräsentieren den gleichzeitigen Schallempfang der Empfangsbasis in den einzelnen Empfangssektoren oder Empfangskanälen. Die Richtungsbildung wird in dem Blockschaltbild im Block 12 "Ribi" durchgeführt.

Mittels einer Fast Fourrier Transformation (FFT) im Fourriertransformator 13 wird für jeden Empfangssektor ein Empfangsspektrum, z.B. das Leistungs- oder Amplitudenspektrum, gebildet. Wie hier nicht weiter dargestellt ist, wird durch Auswerten der größten Pegel in den Empfangsspektren diejenigen Empfangssektoren oder Empfangskanäle, die Ziele enthalten, ermittelt und die Hauptrichtung dieser Empfangssektoren oder Empfangskanäle als Zielpeilungen ausgegeben.

Ist ein Ziel detektiert, so werden zur Bestimmung der Zielentfernung des detektierten Ziels folgende Verfahrensschritte durchgeführt:

Von dem Empfangsspektrum eines zielenthaltenden Empfangssektors wird das Empfangsspektrum aus mindestens einem zielfreien Empfangssektor subtrahiert. Als "zielenthaltender Empfangssektor" wird hier ein Empfangssektor oder Empfangskanal definiert, in dem ein Ziel detektiert werden kann, also von dem Schallempfänger das vom Ziel abgestrahlte und vom Umgebungs- und Eigenstörpegel (Rauschen) überlagerte Signal mit brauchbarem SNR (Signal Noise Ratio) empfangen wird. Als "zielfreier Empfangssektor" wird hier ein Empfangssektor oder Empfangskanal definiert, in dem ein Ziel aufgrund des schlechten SNR nicht oder nur sehr vage detektiert werden kann, also von dem Schallempfänger hauptsächlich nur das Störgeräusch der Umgebung und des Eigenstörgeräusch empfangen wird. Der für die Subtraktion herangezogen mindestens eine zielfreie Empfangssektor wird dabei dem zielenthaltenden Empfangssektor möglichst benachbart gewählt. Alternativ können auch die Empfangsspektren mehrerer zielfreien Empfangssektoren gemittelt und der Mittelwert von dem Empfangsspektrum des zielenthaltenden Empfangssektors subtrahiert werden. In der Zeichnung ist das Empfangsspektrum aus dem zielenthaltenden Empfangssektor mit (S+N)(f) und das Empfangs'spektrum aus dem zielfreien Empfangssektor mit N(f) bezeichnet und jeweils in die Blöcke 14 und 15 eingestellt. Die Subtraktion erfolgt im Differenzbildner 16. Bei der Differenzbildung wird nur derjenige Frequenzbereich der Empfangsspektren herangezogen, in dem der frequenzabhängige Pegel des aus dem zielenthaltenden Empfangssektor erhaltenen Empfangsspektrums immer ausreichend größer ist als der frequenzabhängige Pegel des aus dem zielfreien Empfangssektor erhaltenen Empfangsspektrums. In einem Rechenblock 17 wird der 'Logarithmus der Differenz der Empfangsspektren gebildet und mit 20 multipliziert. Das Ergebnis

$$20 \log \{(S+N)(f) - N(f)\} \qquad (3)$$

wird einem Addierer 18 zugeführt.

Da der im Empfangsspektrum des zielenthaltenden Empfangssektors enthaltene Zielpegel abhängig ist von der Zielentfernung und sich mit zunehmender Zielentfernung verkleinert, wird mittels eines Modells für die Schallausbreitung im Meßgebiet der Ausbr'eitungsverlust (Transmission Loss) TL(f,r) in Abhängigkeit von der Frequenz f für eine Mehrzahl von Zielentfernungen r berechnet. Als Modell kann ein geeignetes der bekannten Schallausbreitungsmodelle verwendet werden, wie sie beispielsweise in [1] aufgelistet sind. Ein geeignetes Schallausbreitungsmodell ist auch in [2] beschrieben. Für eine als wahrscheinlich prädiktierte Zielentfernung $r_1$ wird der Ausbreitungsverlust TL(f, $r_1$) mittels des Modells berechnet und dem Addierer 18 zugeführt. Der Addierer 18 berechnet aus den beiden frequenzabhängigen Eingangsgrößen den frequenzabhängigen Meß-Zielpegel $SL_1(f,r_1)$ für die prädiktierte Zielentfernung $r_1$ gemäß

$$SL_x(f, r_x) = 20 \log \{(S + N)(f) - N(f)\} + TL(f, r_x) \qquad (4)$$

mit x=1.

In einer Datenbank 20 sind für eine Vielzahl von verschiedenen Zieltypen ZT, z.B. Frachter, Tanker, Passagierschiffe, Zerstörer, Corvetten, deren spezifische Signalpegel (Source Level) SL*(f) in Abhängigkeit von der Frequenz f in Zuordnung zu unterschiedlichen Geschwindigkeiten und ggf. bestimmten Aspektwinkeln abgelegt. Solche Datenbanken sind bekannt und in der Literatur vielfach beschrieben, z.B. in [3].

Für ein in einem Empfangssektor detektiertes Ziel wird nun in der Datenbank 20 der Zieltyp ZT ausgewählt, der mit großer Wahrscheinlichkeit dem detektierten Ziel entspricht. Die Auswahl des Zieltyps wird dabei bevorzugt aufgrund einer Zielklassifizierung getroffen, die anhand des Empfangsspektrums aus dem dieses Ziel enthaltenden Empfangssektor im Klassifikator 26 durchgeführt wird. Hierfür geeignete Klassifizierungsverfahren sind bekannt und beispielsweise in [4] zusammenfassend dargestellt.

Aus der Datenbank 20 wird nunmehr der spezifische Signalpegel SL*(f) für den prädiktierten Zieltyp ZT, im folgenden zielspezifischer Signalpegel genannt, ausgelesen und zusammen mit dem Meß-Zielpegel $SL(f,r_x)$ einer Vergleichslogik 21 zugeführt. Hier werden Meß-Zielpegel und zielspezifischer Signalpegel miteinander auf Übereinstimmung verglichen. Wird dabei nur ein nicht ausreichender Grad an Übereinstimmung erreicht, so wird mittels des Modells eine neue Berechnung des Ausbreitungsverlustes $TL(f,r_2)$ für eine geänderte Zielentfernung $r_2$ durchgeführt und dem Addierer 18 zugeführt, der daraus den Meß-Zielpegel $SL(f,r_2)$ errechnet und wieder an die Vergleichslogik 21 legt. Dieser Vorgang wird mit jeweils geänderten Zielentfernungsannahmen $r_x$ solange wiederholt, bis im Entscheidungsblock 22 ein ausreichender Grad an Übereinstimmung festgestellt wird. Ist dies der Fall, so wird die zum Erreichen dieses Übereinstimmungsgrads getroffene Entfernungsannahme $r_x$ als tatsächliche Zielentfernung $r_z$ und der hierfür als wahrscheinlich aus der Datenbank 20 ausgewählte Zieltyp als tatsächlicher Zieltyp ZT bestimmt. In einer Anzeige 24 werden dann die tatsächliche Zielentfernung $r_z$ und der Zieltyp ZT, z.B. "Tanker", graphisch und numerisch dargestellt.

Kann für keine der Entfernungsannahmen $r_x$ der festgelegte Übereinstimmungsgrad erreicht werden, so wird aus der Datenbank 20 ein neuer Zieltyp ZT ausgewählt und die Meß-Zielpegel $SL(f,r_x)$ die für die verschiedenen Zielentfernungsannahmen $r_x$ berechnet worden sind, mit dem zielspezifischen Signalpegel SL*(f) des neuen Zieltyps ZT verglichen, bis für den prädiktierten Zieltyp ZT und eine prädiktierte Zielentfernung $r_x$ der vorgegebene Grad der Übereinstimmung der Pegel erzielt wird. Wird dieser wiederum nicht erreicht, so wird der beschriebene Vorgang für einen weiteren Zieltyp wiederholt, bis letztlich alle Zieltypen abgeprüft sind. Sind alle Zieltypen durchlaufen und ist der festgelegte Übereinstimmungsgrad nicht erreicht worden, wird die Berechnung abgebrochen.

Die Zahl der durchzuführenden Vergleiche der Pegel $SL(f,r_x)$ und SL*(f) kann reduziert werden, wenn - wie hier - bei einer NEIN-Entscheidung im Entscheidungsblock 22 im Entscheidungsblock 23 geprüft wird, ob die angenommene Zielentfernung $r_x$ gleich oder kleiner ist als eine mögliche maximale Entfernung $r_{max}$. Ist dies der Fall, so wird - wie vorstehend beschrieben - der Vergleich des unveränderten zielspezifischen Signalpegels SL*(f) des prädiktierten Zieltyps ZT mit den mit den geänderten Zielentfernungsannahmen $r_x$ berechneten Meß-Zielpegeln $SL(f,r_x)$ fortgesetzt, bis der Übereinstimmungsgrad erreicht oder der Berechnungsvorgang abgebrochen wird. Ist die jeweils abgeprüfte Zielentfernung $r_x$ aber größer als die maximale Zielentfernung $r_{max}$, so wird gleich der zielspezifische Signalpegel SL*(f) für einen neu prädiktierten Zieltyps ZT aus der Datenbank 20 entnommen und der vorstehend beschriebene Vergleich der aus geänderten Zielentfernungsannahmen $r_x$ berechneten Meß-Zielpegel $SL(f,r_x)$ mit dem neuen zielspezifischen Signalpegel SL*(f) durchgeführt, bis der Übereinstimmungsgrad erreicht ist oder der Berechnungsvorgang abgebrochen wird. Alternativ kann aber auch die Berechnung des Ausbreitungsverlustes $TL(f,r_x)$ nur auf solche Werte $r_x$ der Zielentfernung r beschränkt werden, die kleiner sind als eine unter den realen Bedingungen im Meßgebiet festgelegte maximale Zielentfernung $r_{max}$. In diesem Fall werden dann mit den jeweils angenommenen Zielentfernungen $r_x$ alle in der Datenbank 20 enthaltenen und als mögliche Ziele in Betracht kommenden Zieltypen ZT abgeprüft. Dieser Vorgang wird abgebrochen, wenn in keinem Fall der festgelegte Übereinstimmungsgrad erreicht wird.

Da die Signalpegel der Zieltypen ZT in der Datenbank 20 auch in Zuordnung zu verschiedenen Geschwindigkeiten abgelegt sind, kann der unmittelbar zuvor beschriebene Verfahrensgang auch noch auf den Vergleich mit zielspezifischen Signalpegeln SL* für unterschiedliche Geschwindigkeiten des gleichen Zieltyps ZT erstreckt werden. Ggf. können auch noch die Aspektwinkel der Zieltypen ZT, die abhängig sind von der Fahrtrichtung des Zieltyps und dessen Zielpegel beeinflussen, berücksichtigt werden.

Der in der Vergleichslogik 21 vorgenommene Vergleich der Meß-Zielpegel $SL(f,r_x)$ mit den aus der Datenbank 20 ausgelesenen zielspezifischen Signalpegeln SL*(f) kann beispielsweise nach der bekannten Methode der kleinsten Fehlerquadrate durchgeführt werden. Dabei werden die Quadrate der Abstände des Meß-Zielpegels und des zielspezifischen Signalpegels über den Frequenzbereich gebildet und aufsummiert, und im Entscheidungsblock 22 wird geprüft, ob die Summe der Fehlerquadrate ein Minimum "<min" ergibt. Vorteilhaft werden die Fehlerquadrate vor der Summenbildung noch frequenzabhängig gewichtet, um den Einfluß der höherfrequenten Signalanteile, die ein geringes SNR haben, auf das Vergleichsergebnis zu reduzieren. Entsprechende Wichtungsfaktoren W(f) werden im Block 25 generiert. Andere Methoden für den Vergleich der Pegel sind möglich, z.B. Korrelation, Pattern Matching, Gradientenbildung.

Das beschriebene Verfahren kann noch dahingehend modifiziert werden, daß allen Ergebnisse aus dem Vergleich oder nur den Ergebnissen, die innerhalb eines Konfidenzintervalls des vorgegebenen Übereinstimmungsgrads liegen, eine Wahrscheinlichkeit σ zugeordnet und in der Anzeige 24 dargestellt werden. Es ergibt sich dann eine Reihenfolge von mit Wahrscheinlichkeiten belegten Zielentfernungen und Zieltypen σ($r_z$; ZT), von denen die besten ausgewählt werden können. In Anwendung der Methode der kleinsten Fehlerquadrate können dabei die Summen der kleinsten Fehlerquadrate in Wahrscheinlichkeiten umgerechnet werden. Ein Maß für die Richtigkeit der angenommenen Zielentfernung ist der Kehrwert der Summe der kleinsten Fehlerquadrate. Je kleiner die Summe der kleinsten Fehlerquadrate ist, desto größer ist die Wahrscheinlichkeit, daß sich das Ziel in der angenommenen Zielentfernung befindet.

Die beschriebenen verschiedenen Verfahrensschritte werden breitbandig berechnet, d.h. es wird im gesamten zugelassenen Frequenzband mit ausreichend schmalen Teilbändern gerechnet, innerhalb derer die Pegel der Terme von Gl. (4) als weiß angenommen werden können.

Literatur:

[1] Heinz G. Urban "Handbuch der Wasserschalltechnik" Eigenverlag der STN ATLAS Elektronik GmbH, Bremen, Nov. 2000, Anhang A7,

[2] Finn B. Jensen, W. A. Kupermann et al. "Computational Ocean Acoustics", AIP Press 1994, p. 196 ff and references on p. 201,

[3] Robert J. Urick "Principles of underwater sound" McGraw-Hill Inc., 1983, page 346, table 10.2,

[4] L. Kühnle "Classification and Identification - CAI - by Submarine Sonars", Naval Forces Nov. 1987, p. 27 - 31.

## Patentansprüche

1. Verfahren zum Bestimmen der Entfernung eines Schall ins Wasser abstrahlenden Ziels von einem untergetauchten, zielfernen Schallempfänger (10) aus, der elektroakustische Wandler (11) zum Empfang des vom Ziel abgestrahlten Schalls aufweist, **dadurch gekennzeichnet, daß** aus den elektrischen Empfangssignalen der Wandler (11) durch Richtungsbildung (12) getrennte Empfangssektoren aufgespannt und in den Empfangssektoren Ziele detektiert werden, daß in mindestens einem zielenthaltenden Empfangssektor und in mindestes einem zielfreien Empfangssektor jeweils das Empfangsspektrum (S+N; N) gemessen und das Empfangsspektrum (N) aus dem zielfreien Empfangssektor von dem Empfangsspektrum aus dem zielenthaltenden Empfangssektor innerhalb eines festgelegten Frequenzbereichs subtrahiert wird, daß mittels eines Modells (19) der Ausbreitungsverlust (TL) als Funktion der Frequenz (f) für eine angenommene Zielentfernung ($r_x$) berechnet wird, daß aus der Differenz der beiden Empfangsspektren (S+N - N) und dem Ausbreitungsverlust (TL) ein Meß-Zielpegel (SL) des Ziels als Funktion der Frequenz (f) berechnet wird, daß aus einer Datenbank (20) der zielspezifische Signalpegel (SL*) eines als wahrscheinlich ausgewählten Zieltyps als Funktion der Frequenz (f) ausgelesen wird, daß der Meß-Zielpegel (SL) und der zielspezifische Signalpegel (SL*) miteinander verglichen werden und daß die Berechnung des Ausbreitungsverlustes (TL) mit einer jeweils geänderten Zielentfernungsannahme ($r_x$) und die Berechnung des Meß-Zielpegels (SL) mit dem neu berechneten Ausbreitungsverlust (TL) solange wiederholt wird, bis der Vergleich von Meß-Zielpegel (SL) und zielspezifischem Signalpegel (SL*) einen vorgegebenen Grad der Übereinstimmung über den festgelegten Frequenzbereich ergibt und daß die zum Erreichen dieses Übereinstimmungsgrads getroffene Entfernungsannahme ($r_x$) als tatsächliche Zielentfernung ($r_z$) ausgegeben wird.

2. Verfahren nach Anspruch 1, **dadurch gekennzeichnet, daß** bei Nichterreichen des vorgegebenen Übereinstimmungsgrads zwischen den Pegeln (SL, SL*) wiederholt ein weiterer Vergleich der aus den für die Zielentfernungsannahme ($r_x$) berechneten Ausbreitungsverlusten (TL) berechneten Meß-Zielpegel (SL) mit zielspezifischen Signalpegeln (SL*) des gleichen Zieltyps für verschiedene Geschwindigkeiten und/oder Aspektwinkel durchgeführt wird, bis der Vergleich den vorgegebenen Grad an Übereinstimmung über den festgelegten Frequenzbereich ergibt.

3. Verfahren nach Anspruch 1 oder 2, **dadurch gekennzeichnet, daß** bei Nichterreichen des Übereinstimmungsgrads zwischen den Pegeln (SL, SL*) wiederholt ein weiterer Vergleich der aus den für die Zielentfernungsannahme ($r_x$) geschätzten Ausbreitungsverlusten (TL) berechneten Meß-Zielpegel (SL) mit zielspezifischen Signalpegeln (SL*) von weiteren, in der Datenbank (20) abgelegten Zieltypen durchgeführt wird, bis der Vergleich den vorgegebenen Grad an Übereinstimmung über den festgelegten Frequenzbereich ergibt.

4. Verfahren nach einem der Ansprüche 1 - 3, **dadurch gekennzeichnet, daß** der Ausbreitungsverlustwert (TL) nur für solche Zielentfernungen ($r_x$) berechnet wird, die kleiner sind als eine maximal mögliche Zielentfernung ($r_{max}$).

5. Verfahren nach einem der Ansprüche 1 - 4, **dadurch gekennzeichnet, daß** zur Berechnung des Meß-Zielpegels (SL) der Logarithmus der Differenz der Empfangsspektren (S+N - N) gebildet und der Ausbreitungsverlust (TL) zu dem mit 20 multiplizierten Logarithmus addiert wird.

6. Verfahren nach einem der Ansprüche 1 - 5, **dadurch gekennzeichnet, daß** die Auswahl des Zieltyps aus der Datenbank (20) aufgrund einer anhand des Empfangsspektrums (S+N) aus dem zielenthaltenden Empfangssektor durchgeführten Zielklassifizierung (26) getroffen wird.

7. Verfahren nach einem der Ansprüche 1 - 6, **dadurch gekennzeichnet, daß** beim Vergleich von Meß-Zielpegeln (SL) und zielspezifischen Signalpegeln (SL*) die Methode der kleinsten Fehlerquadrate angewendet wird.

8. Verfahren nach einem der Ansprüche 1 - 7, **dadurch gekennzeichnet, daß** beim Vergleich von Meß-Zielpegeln (SL) und zielspezifischen Signalpegeln (SL*) die Pegelwerte frequenzabhängig gewichtet werden.

9. Verfahren nach einem der Ansprüche 1 - 8, **dadurch gekennzeichnet, daß** als festgelegter Frequenzbereich bei der Differenzbildung der Empfangsspektren (S+N, N) derjenige Frequenzbereich gewählt wird, in dem der Pegel des aus dem zielenthaltenden Empfangssektor erhaltenen Empfangsspektrums (S+N) ausreichend größer ist als der Pegel des aus dem zielfreien Empfangssektor erhaltenen Empfangsspektrums (N).

10. Verfahren nach einem der Ansprüche 1 - 9, **dadurch gekennzeichnet, daß** der mindestens eine zielfreie Empfangssektor in der Nachbarschaft des zielenthaltenden Empfangssektors ausgewählt wird.

11. Verfahren nach einem der Ansprüche 1 - 10, **dadurch gekennzeichnet, daß** das Empfangsspektrum (N) jeweils in mehreren zielfreien Empfangssektoren gemessen und aus diesen Empfangsspektren (N) ein gemitteltes Empfangsspektrum gebildet wird, das zur Subtraktion von dem Empfangsspektrum (S+N) aus dem zielenthaltenden Empfangssektor verwendet wird.

12. Verfahren nach einem der Ansprüche 1 - 11, **dadurch gekennzeichnet, daß** zur Richtungsbildung in bekannter Weise die zeitverzögerten Empfangssignale aller Wandler (11) oder Gruppen von Wandlern (11) konphas zu Gruppensignalen addiert werden und daß die Empfangsspektren (N+S; N) durch Fourriertransformation der Gruppensignale gebildet werden.

**Claims**

1. Method for determining the range of a target which emits sound into the water, from an immersed sound receiver (10) which is remote from the target and has electroacoustic transducers (11) for reception of the sound which is emitted from the target, **characterized in that** separate reception sectors are covered by direction formation (12) from the electrical signals which are received by the transducers (11) and targets are detected in the reception sectors, **in that** the reception spectrum (S+N; N) is in each case measured in at least one reception sector which contains a target and in at least one reception sector which does not contain a target, and the reception spectrum (N) from the reception sector which does not contain a target is subtracted from the reception spectrum from the reception sector which does contain a target, within a defined frequency range, **in that** the propagation loss (TL) is calculated by means of a model (19) as a function of the frequency (f) for an assumed target range ($r_x$) **in that** a measurement target level (SL) of the target is calculated as a function of the frequency (f) from the difference between the two reception spectrum (S+N - N) and the propagation loss (TL), **in that** the target-specific signal level (SL*) of a target type which is selected as being probable is read as a function of the frequency (f) from a database (20), **in that** the measurement target level (SL) and the target-specific signal level (SL*) are compared with one another, and **in that** the calculation of the propagation loss (TL) is repeated using a respectively changed target range assumption ($r_x$) and the calculation of the measurement target level (SL) using the newly calculated propagation loss (TL) until the comparison of the measurement target level (SL) and the target-specific signal level (SL*) results in a predetermined degree of match across the defined frequency range, and **in that** the range assumption ($r_x$) which is made in order to achieve this degree of match is emitted as the actual target range ($r_z$).

**2.** Method according to Claim 1, **characterized in that**, if the predetermined degree of match between the levels (SL, SL*) is not achieved, a further comparison of the measurement target levels (SL), calculated from the propagation losses (TL) which are calculated for the target range assumption ($r_x$), with target-specific signal levels (SL*) for the same target type is carried out repeatedly for different velocities and/or aspect angles until the comparison results in the predetermined degree of match over the defined frequency range.

**3.** Method according to Claim 1 or 2, **characterized in that**, if the degree of match between the levels (SL, SL*) is not achieved, a further comparison of the measurement target levels (SL) calculated from the propagation losses (TL) as estimated for the .target range assumption ($r_x$) with target-specific signal levels (SL*) of further target types which are stored in the database (20) is carried out, until the comparison results in the predetermined degree of match over the defined frequency range.

**4.** Method according to one of Claims 1 - 3, **characterized in that** the propagation loss value (TL) is calculated only from those target ranges ($r_x$) which are less than a maximum possible target range ($r_{max}$).

**5.** Method according to one of Claims 1 - 4, **characterized in that**, in order to calculate the measurement target level (SL), the logarithm of the difference between the received spectra (S+N - N) is formed, and the propagation loss (TL) is added to the logarithm multiplied by 20.

**6.** Method according to one of Claims 1 - 5, **characterized in that** the target time is selected from the database (20) on the basis of a target classification (26) which is carried out on the basis of the reception spectrum (S+N) from the reception sector which contains a target.

**7.** Method according to one of Claims 1 - 6, **characterized in that** the least square error method is used for the comparison of measurement target levels (SL) and target-specific signal levels (SL*).

**8.** Method according to one of Claims 1 - 7, **characterized in that** the level values are weighted on a frequency-dependent basis for the comparison of the measurement target levels (SL) and target-specific signal levels (SL*).

**9.** Method according to one of Claims 1 - 8, **characterized in that** that frequency range in which the level of the reception spectrum (S+N) which is obtained from the reception sector which contains a target is sufficiently greater than the level of the reception spectrum (N) which is obtained from the reception sector which does not contain a target is chosen as the defined frequency range for forming the difference between the reception spectra (S+N, N).

**10.** Method according to one of Claims 1 - 9, **characterized in that** the at least one reception sector which does not contain a target is selected to be in the vicinity of the reception sector which contains a target.

**11.** Method according to one of Claims 1 - 10, **characterized in that** the reception spectrum (N) is measured in each of two or more reception sectors which do not contain a target, and an averaged reception spectrum is formed from these reception spectra (N) and is used for subtraction of the reception spectrum (S+N) from the reception sector which contains a target.

**12.** Method according to one of Claims 1 - 11, **characterized in that** the time-delayed signals received by all the transducers (11) or groups of transducers (11) are added in phase to form group signals in order to form a direction in a known manner, and **in that** the reception spectra (N+S, N) are formed by Fourier transformation of the group signals.

**Revendications**

**1.** Procédé pour déterminer la distance d'une cible diffusant un son dans l'eau depuis un récepteur de son (10) immergé éloigné de la cible, lequel présente des convertisseurs électroacoustiques (11) pour recevoir le son diffusé par la cible, **caractérisé en ce que** des secteurs de réception distincts sont ouverts par calcul de la direction (12) à partir des signaux électriques reçus des convertisseurs (11) et des cibles sont détectées dans les secteurs de réception, que le spectre de réception (S+N ; N) est à chaque fois mesuré dans au moins un secteur de réception contenant une cible et dans au moins un secteur de réception dépourvu de cible et le spectre de réception (N) du secteur de réception dépourvu de cible est soustrait du spectre de réception du secteur de réception contenant une cible à l'intérieur d'une plage de fréquence donnée, que les pertes de propagation (TL) en fonction de la fréquence (f) pour une distance supposée de la cible ($r_x$) sont calculées au moyen d'un modèle (19), qu'un niveau de cible mesuré (SL) de la cible en fonction de la fréquence (f) est calculé à partir de la différence des deux spectres de réception (S+N - N) et des pertes de propagation (TL), que le niveau de signal spécifique à la cible (SL*) d'un type de cible choisi comme étant probable en fonction de la fréquence (f) est chargé à partir d'une base de données (20), que le niveau de cible mesuré (SL) et le niveau de signal spécifique à la cible (SL*) sont comparés entre eux et que le calcul des pertes de propagation (TL) avec une supposition à chaque fois modifiée de la distance de la cible ($r_x$) et le calcul du niveau de cible mesuré (SL) avec les nouvelles pertes de propagation sont répétés jusqu'à ce la comparaison du niveau de cible mesuré (SL) et du niveau de signal spécifique à la cible (SL*) donne un degré de concordance prédéfini sur la plage de fréquence donnée et que la distance supposée ($r_x$) adoptée pour obtenir ce degré de concordance est émise comme étant la distance réelle de la cible ($r_z$).

2. Procédé selon la revendication 1, **caractérisé en ce que** si le degré de concordance prédéfini entre les niveaux (SL, SL*) n'est pas atteint, une nouvelle comparaison du niveau de cible mesuré (SL) calculé à partir des pertes de propagation (TL) calculées pour la distance supposée de la cible ($r_x$) avec les niveaux de signal spécifiques à la cible (SL*) du même type de cible est effectuée de manière répétitive pour différentes vitesses et/ou différents angles d'apparition jusqu'à ce que la comparaison permette d'obtenir le degré de concordance prédéfini sur la plage de fréquence donnée.

3. Procédé selon la revendication 1 ou 2, **caractérisé en ce que** si le degré de concordance entre les niveaux (SL, SL*) n'est pas atteint, une nouvelle comparaison du niveau de cible mesuré (SL) calculé à partir des pertes de propagation (TL) évaluées pour la distance supposée de la cible ($r_x$) avec les niveaux de signal spécifiques à la cible (SL*) d'autres types de cible enregistrés dans la base de données (20) est effectuée de manière répétitive jusqu'à ce que la comparaison permette d'obtenir le degré de concordance prédéfini sur la plage de fréquence donnée.

4. Procédé selon l'une des revendications 1 à 3, **caractérisé en ce que** la valeur des pertes de propagation (TL) n'est calculée que pour les distances de la cible ($r_x$) qui sont inférieures à une distance maximale possible de la cible ($r_{max}$).

5. Procédé selon l'une des revendications 1 à 4, **caractérisé en ce que** pour effectuer le calcul du niveau de cible mesuré (SL), on calcule le logarithme de la différence des spectres de réception (S+N - N) et les pertes de propagation (TL) sont additionnées au logarithme multiplié par 20.

6. Procédé selon l'une des revendications 1 à 5, **caractérisé en ce que** la sélection du type de cible à partir de la base de données (20) est effectuée sur la base d'une classification des cibles (26) effectuée sur le secteur de réception contenant une cible à l'aide du spectre de réception (S+N).

7. Procédé selon l'une des revendications 1 à 6, **caractérisé en ce que** la méthode du plus petit carré d'erreur est utilisée lors de la comparaison des niveaux de cible mesurés (SL) et des niveaux de signal spécifiques à la cible (SL*).

8. Procédé selon l'une des revendications 1 à 7, **caractérisé en ce que** les valeurs du niveau sont pondérées en fonction de la fréquence lors de la comparaison des niveaux de cible mesurés (SL) et des niveaux de signal spécifiques à la cible (SL*).

9. Procédé selon l'une des revendications 1 à 8, **caractérisé en ce que** la plage de fréquence donnée choisie lors du calcul de la différence des spectres de réception (S+N, N) est la plage de fréquence dans laquelle le niveau du spectre de réception (S+N) obtenu à partir du secteur de réception contenant une cible est suffisamment supérieur au niveau du spectre de réception (N) obtenu à partir du secteur de réception dépourvu de cible.

10. Procédé selon l'une des revendications 1 à 9, **caractérisé en ce que** l'au moins un secteur de réception dépourvu de cible est choisi dans le voisinage du secteur de réception contenant une cible.

11. Procédé selon l'une des revendications 1 à 10, **caractérisé en ce que** le spectre de réception (N) est à chaque fois mesuré dans plusieurs secteurs de réception dépourvus de cible et à partir de ces spectres de réception (N) est calculé un spectre de réception moyen qui est utilisé pour être soustrait du spectre de réception (S+N) du secteur de réception contenant une cible.

**12.** Procédé selon l'une des revendications 1 à 11, **caractérisé en ce que** pour calculer la direction, les signaux de réception retardés dans le temps de tous les convertisseurs (11) ou groupes de convertisseurs (11) sont additionnés de manière connue en phase aux signaux des groupes et que les spectres de réception (N+S ; N) sont calculés par transformation de Fourier des signaux des groupes.